# NEUE EUROPÄISCHE PATENTSCHRIFT

(11) **EP 1 332 658 B2**
(45) Veröffentlichungstag und Bekanntmachung des Hinweises auf die Entscheidung über den Einspruch: **04.05.2011**
(45) Hinweis auf die Patenterteilung: 20.06.2007
(21) Anmeldenummer: 03000782.7
(22) Anmeldetag: 14.01.2003
(51) Int. Cl.: A01B 63/32

(54) **Arbeitsmaschine mit tragbarem Bediengerät**
Working machine with portable operation unit
Machine avec commande portable

(30) Priorität: 30.01.2002 DE 10203653
(43) Veröffentlichungstag der Anmeldung: 06.08.2003
(73) Patentinhaber: DEERE & COMPANY, Moline, Illinois 61265-8098 (US)
(72) Erfinder: Braunhardt, Klaus, 66482 Zweibrücken (DE); Bischoff, Lutz, 66503 Dellfeld (DE); Beck, Folker, Dr., Bettendorf, IA 52722 (US); Stankewitz, Britta, 75181 Pforzheim (DE); Ehinger, Peter, 71254 Ditzingen (DE)
(74) Vertreter: Holst, Sönke

(56) Entgegenhaltungen:
- EP-A- 1 004 230
- WO-A-01/16661
- WO-A-01/77765
- DE-A- 19 511 305
- DE-A- 19 624 027
- US-A- 6 003 455
- US-A- 6 112 139

## Beschreibung

Die Erfindung betrifft eine Arbeitsmaschine mit mindestens einem Aktor und einem Bediengerät, das über eine drahtlose Datenübertragungseinrichtung zum Datenaustausch mit dem Aktor eingerichtet und mit einer Eingabeeinrichtung und einer Ausgabeeinrichtung versehen ist, wobei der Aktor mittels der Eingabeeinrichtung des Bediengeräts beeinflussbar ist, ein Sensor zur Messung eines durch den Aktor beeinflussbaren Betriebsparameters der Arbeitsmaschine eingerichtet ist, die Messwerte und/oder davon abhängige Daten über die Datenübertragungseinrichtung auf das Bediengerät übertragbar sind und die Ausgabeeinrichtung betreibbar ist, eine von dem Messwert des Sensors abhängige Information zur Ausgabe zu bringen.

In der EP 1 004 230 A wird ein abnehmbares Bediengerät für ein landwirtschaftliches Fahrzeug beschrieben. Das tragbare, in einer Hand haltbare Bediengerät ermöglicht es einem Bediener, sich im Abstand vom Fahrzeug aufzustellen und wenigstens eine Funktion des Fahrzeugs oder eines damit verbundenen Arbeitsgeräts zu steuern. Dadurch können Vorgänge, die normalerweise von der Kabine des Fahrzeugs aus gesteuert werden, aber - wie die Einstellung eines hydraulischen Krafthebers - schwer einsehbar sind, einfacher durchgeführt werden. Das Bediengerät kann im Normalbetrieb in der Kabine des Fahrzeugs an einer Dockingstation angekoppelt werden. Es kann auch mit einer Anzeigevorrichtung ausgestattet sein. Die angezeigten Daten werden nicht näher spezifiziert.

In der GB 2 263 376 A wird ein Fahrzeugüberwachungssystem beschrieben, das eine Übertragung von Betriebsparametern eines Fahrzeugs über eine drahtlose Telefonverbindung an eine zentrale Überwachungsstelle erlaubt.

Die als gattungsbildend angesehene WO 01/16661 A beschreibt ein mobiles Sprühfahrzeug, dessen elektronische Sprühsteuerungen über eine drahtlose Kommunikationsverbindung mit einer Basisstation verbunden ist, auf der mittels Sensoren erfasste Betriebsdaten des Sprühers angezeigt und ihre Sollwerte verändert werden können.

Die DE 196 24 027 A beschreibt ein abnehmbares Bordcomputersystem für eine Arbeitsmaschine, das zum Ändern von Einstellwerten der Arbeitsmaschine geeignet und mit einer Anzeige und einer Bedienplatte ausgestattet ist.

Die der Erfindung zugrunde liegende Aufgabe wird darin gesehen, eine Kombination aus einer Arbeitsmaschine und einem Bediengerät zu schaffen, die einem Bediener eine Diagnose des Zustands der Arbeitsmaschine und eine eventuelle Fehlererkennung erleichtert.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das tragbare Bediengerät ist mit einer Eingabeeinrichtung und einer Ausgabeeinrichtung ausgestattet und kann von einem Bediener mit sich geführt werden, wenn er zu Wartungs- oder Diagnosezwecken einen Rundgang um die Arbeitsmaschine durchführt und sie inspiziert. Das Bediengerät kommuniziert über eine bidirektionale, drahtlose Verbindung mit dem mindestens einen Aktor der Arbeitsmaschine. Dazu kann eine Radio- oder Infrarotübertragung vorgesehen sein. Der Bediener kann durch Eingaben in die Eingabeeinrichtung des Bediengeräts zu Kontrollzwecken einen oder mehrere Betriebsparameter der Arbeitsmaschine beeinflussen. Als Arbeitsmaschine ist im Rahmen der vorliegenden Erfindung nicht nur ein insbesondere landwirtschaftliches Fahrzeug, wie beispielsweise eine selbstfahrende Erntemaschine zu verstehen, sondern auch mit dem Fahrzeug in Verbindung stehende, beispielsweise angebaute oder angehängte Geräte. Die beispielsweise optisch oder akustisch arbeitende Ausgabeeinrichtung ist eingerichtet, eine Information wiederzugeben, die von dem Messwert eines Sensors abhängt, der einen durch den Aktor beeinflussbaren Betriebsparameter der Arbeitsmaschine erfasst und dessen Messwerte bzw. daraus abgeleitete Daten über die bidirektionale Datenübertragungseinrichtung auf das Bediengerät übertragen werden. Der Bediener kann somit über das Bediengerät einen interaktiven Dialog mit der Arbeitsmaschine durchführen. Auf diese Weise erhält der Bediener die Möglichkeit, sich in die Nähe des Aktors bzw. des durch ihn beeinflussten Elements der Arbeitsmaschine zu begeben und durch eine Eingabe in das Bediengerät mittels des Aktors einen Betriebsparameter der sich im Betrieb befindlichen Arbeitsmaschine zu ändern und sich auf der Ausgabeeinrichtung des Bediengeräts ein Messergebnis der Betriebsparameteränderung ausgeben zu lassen. Es wird somit vor Ort eine optische und/oder akustische Kontrolle der Arbeitsmaschine durch den Bediener und zusätzlich die Ausgabe des Messergebnisses des Sensors bzw. einer daraus abgeleiteten Information möglich. Mit der Eingabeeinrichtung des Bediengeräts ist ein Testlauf des Aktors veranlassbar. In diesem Testlauf durchläuft der Aktor unterschiedliche, vorprogrammierte Stellungen, so dass die Arbeitsmaschine verschiedene Betriebsparameter annimmt.

Es können von der Ausgabeeinrichtung die Messwerte des Sensors und vorzugsweise zugehörige, zulässige untere und/oder obere Grenzwerte ausgegeben werden, die in einem Speicher abgespeichert sind. Der Bediener kann somit leicht erkennen, ob sich die Arbeitsmaschine im betriebsfähigen Zustand befindet oder Wartungs- bzw. Reparaturarbeiten erforderlich sind.

Denkbar ist auch eine Kategorisierung der Messwerte in verschiedene Klassen, wie "in Ordnung" oder "Fehlerhaft" und eine Anzeige der dem jeweiligen Messwert des Sensors zugeordnete Klasse, um dem Bediener die Beurteilung der Messwerte weiter zu erleichtern.

In einer fortgeschrittenen Ausführungsform gibt die Ausgabeeinrichtung Handlungsvorschläge aus. Sie kann den Bediener beispielsweise darauf hinweisen, ein defektes Teil auszutauschen, wenn die Messwerte des Sensors auf einen Fehler des entsprechenden Teils hinweisen. Dazu kann eine Art Datenbank vorgesehen sein, in der mögliche Messwerte und die ihnen zugeordneten Informationen abgelegt sind. Die aktuellen Messwerte werden dann mit den möglichen Messwerten verglichen und bei den am Besten zusammenpassenden Werten wird die zugehörige Information angezeigt.

Zweckmäßigerweise gibt die Ausgabeeinrichtung dem Bediener einen Hinweis, welcher Testlauf gerade durchgeführt wird.

Die jeweils abrufbaren Testprogramme hängen von der physikalischen Position des Bediengeräts ab. Durch eine geeignete Positionsermittlungseinrichtung wird festgestellt, an welcher Stelle der Arbeitsmaschine sich das Bediengerät gerade befindet. Aus mindestens zwei verfügbaren Testdurchläufen werden durch eine entsprechende Software nur die ausgewählt, die sich von der festgestellten Position des Bediengeräts aus durch die Bedienungsperson gut optisch und/oder akustisch verfolgen lassen. Nur diese Testdurchläufe können mittels der Eingabeeinrichtung ausgewählt werden. Dazu können entsprechende Menüs oder Menüpunkte vorgesehen sein, die positionsabhängig aktiviert und deaktiviert werden.

Nach Beendigung des Testlaufs gibt die Ausgabeeinrichtung dem Bediener einen Hinweis auf das Ergebnis des Testlaufs. Aus den gesammelten Messwerten des Sensors oder der Sensoren wird eine Ergebnisinformation abgeleitet, die in der Regel verschiedene Klassen umfasst, und ausgegeben.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers,
- Fig. 2: eine schematische Ansicht des Bordcomputersystems des Mähdreschers, und
- Fig. 3: eine schematische Ansicht des Bediengeräts des Mähdreschers.

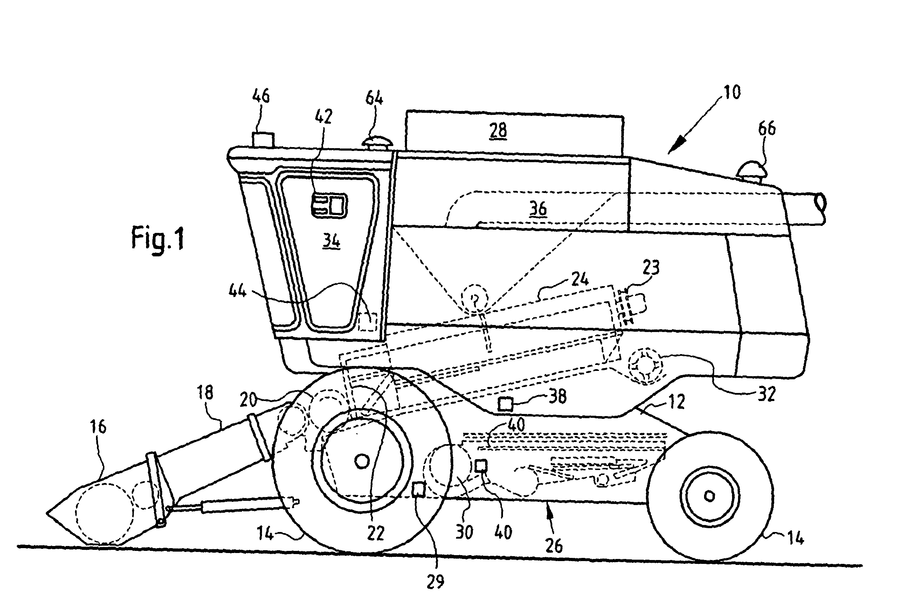

Figur 1 zeigt die Seitenansicht eines selbstfahrenden landwirtschaftlichen Mähdreschers 10. Obwohl die vorliegende Erfindung als an einem Axialflussmähdrescher angebracht offenbart wird, kann sie auch an konventionellen und anderen Mähdreschern wie auch an beliebigen anderen Typen von Arbeits- und Landmaschinen verwendet werden.

Der Mähdrescher 10 umfasst eine tragende Struktur 12 mit Rädern 14. Vom Mähdrescher 10 erstreckt sich ein Schneidwerk 16 nach vorn, das geerntetes Gut einem Schrägförderer 18 zuführt. Der Schrägförderer 18 enthält eine Fördereinrichtung, um das geerntete Gut den Dresch-, Trenn- und Reinigungseinrichtungen des Mähdreschers 10 zuzuführen. Der Schrägförderer 18 führt das geerntete Gut einer sich quer erstreckenden Leittrommel 20 zu, die das Gut durch einen Einlassübergangsbereich 22 einer axialen Dresch- und Trenneinrichtung 24 zuführt. Korn und Spreu werden von der axialen Dresch- und Trenneinrichtung 24 einer Reinigungseinrichtung 26 zugeführt. Die Reinigungseinrichtung 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird von der axialen Dresch- und Trenneinrichtung 24 einer quer angeordneten Leittrommel 32 zugeführt, die das Material an der Rückseite des Mähdreschers 10 hinaus befördert. Zeitweise im Korntank 28 gespeichertes Erntegut kann durch Betätigung einer Entladeförderschnecke 36 auf Veranlassung durch einen Bediener in einer Bedienerkabine 34 entladen werden.

An der Rückseite des Bodens der Bedienerkabine 34 befindet sich ein Bordcomputer 44. Er dient zur Einstellung der verschiedenen Aktoren des Mähdreschers 10.

Ein erster Aktor dient zur Einstellung eines verstellbaren Antriebs 23 der Dresch- und Trenneinrichtung 24. Ein Verbrennungsmotor, der als Hauptmotor des Mähdreschers 10 dient, treibt auch den verstellbaren Antrieb 23 an. Der verstellbare Antrieb 23 ist ein Riementrieb, der eine nicht gezeigte antreibende Riemenscheibe mit variablem Durchmesser und eine an der Rückseite der Dresch- und Trenneinrichtung 24 angeflanschte, angetriebene Riemenscheibe mit variablem Durchmesser umfasst. Ein Riemen erstreckt sich zwischen der antreibenden Riemenscheibe und der angetriebenen Riemenscheibe. Hydraulikzylinder steuern die Durchmesser der Riemenscheiben. Ein erster Hydraulikzylinder ist mit der angetriebenen Riemenscheibe gekoppelt und bewegt die Stirnplatten der Riemenscheibe nach innen bzw. außen, um den wirksamen Durchmesser der Riemenscheibe gegenüber dem Riemen zu steuern. Durch eine Änderung des wirksamen Durchmessers der Riemenscheiben wird die effektive Geschwindigkeit der angetriebenen Riemenscheibe geändert. Durch eine Hydraulikleitung wird dem Hydraulikzylinder unter Druck stehende Hydraulikflüssigkeit von einem Ventilzusammenbau zugeführt. Der Ventilzusammenbau wird elektromagnetisch durch den Bordcomputer 44 gesteuert. Die Hydraulikzylinder wirken somit als Aktor zur Einstellung der Drehgeschwindigkeit der Dresch- und Trenneinrichtung. Der Rotor wird durch die Riemenscheiben variablen Durchmessers mit einer konstanten, ausgewählten Rotorgeschwindigkeit angetrieben.

Ein zweiter Aktor ist ein Elektromotor 29, der das Reinigungsgebläse 30 antreibt. Die Drehgeschwindigkeit des Elektromotors 29 ist durch den Bordcomputer 44 einstellbar.

Der Bordcomputer 44 ist mit einem ersten Sensor 38 in Form eines Drehzahlsensors verbunden, der die Drehzahl des Rotors der Dresch- und Trenneinrichtung 24 erfasst. Ein zweiter mit dem Bordcomputer 44 verbundener Sensor 40 ist vor dem Luftauslass des Reinigungsgebläses 30 angeordnet und erfasst die Geschwindigkeit der aus dem Reinigungsgebläse 30 austretenden Luft.

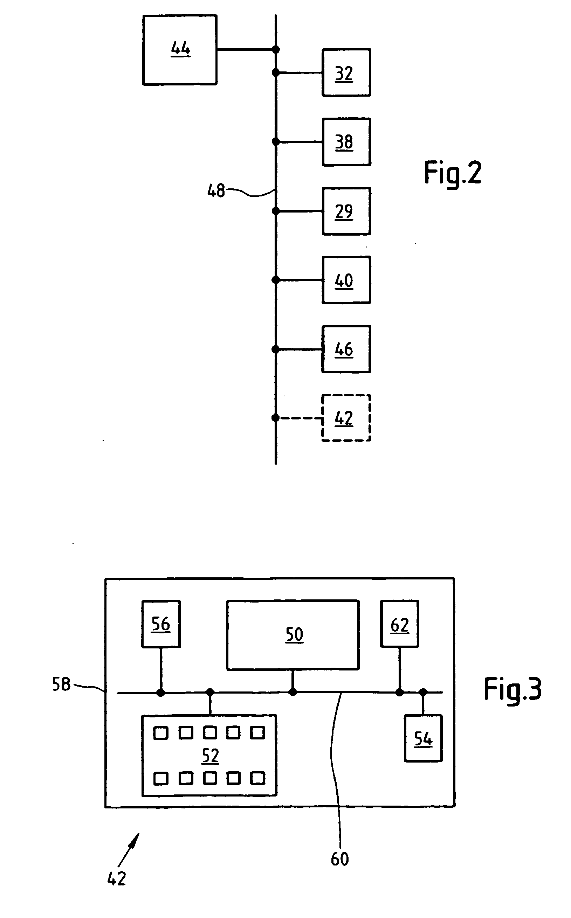

Der Bordcomputer 44 ist weiterhin mit einer Datenübertragungseinrichtung 46 verbunden, die zum Übertragen und Empfangen von Daten eingerichtet ist. Anhand des in Figur 2 dargestellten Schemas ist erkennbar, dass der Bordcomputer 44 über einen durchgehenden Bus 48 mit dem ersten Sensor 38, dem zweiten Sensor 40, dem Elektromotor 29 des Reinigungsgebläses 30, dem Ventilzusammenbau des verstellbaren Antriebs 23 der Dresch- und Trenneinrichtung 24 und der Datenübertragungseinrichtung 46 verbunden ist.

Ein Bediengerät 42 ist detailliert in der Figur 3 dargestellt. Das Bediengerät 42 weist eine Steuerung 54 auf, die über einen Bus 60 mit einer als Ausgabeeinrichtung dienenden Anzeigeeinrichtung 50, einer als Eingabeeinrichtung vorgesehenen Tastatur 52 und einer bidirektionalen Datenübertragungseinrichtung 56 verbunden ist. Die genannten Komponenten des Bediengeräts sind, wie auch eine geeignete Stromversorgung, in einem Gehäuse 58 angeordnet.

Das Bediengerät 42 kann im Normalbetrieb des Mähdreschers 10 in der Bedienerkabine 34 an einer entsprechenden Dockingstation befestigt und zur Eingabe und Anzeige von Betriebsparametern des Mähdreschers 10 verwendet werden, wie auch in der Figur 1 angedeutet ist. Im Normalbetrieb ist das Bediengerät 42 vorzugsweise an den Bus 48 angeschlossen, wie durch die gestrichelten Linien in Figur 2 angedeutet wird. Wenn das Bediengerät an den Bus 48 angeschlossen ist, besteht die Möglichkeit, Speicherelemente der Stromversorgung des Bediengeräts 42 vom Bordnetz des Mähdreschers 10 aus aufzuladen.

Durch entsprechende Eingaben in die Tastatur 56 können die Betriebswerte der Aktoren eingegeben bzw. aus Vorgaben ausgewählt werden. Dabei werden entsprechende Daten von der Steuerung 54 des Bediengeräts 42 auf den Bordcomputer 44 übertragen. Auch eine manuelle Änderung vorgegebener Betriebswerte über die Tastatur 56 ist denkbar. Die Anzeigeeinrichtung 50 dient zur Anzeige der gewählten und/oder wählbarer Betriebswerte und von Messwerten der Sensoren bzw. daraus abgeleiteter Informationen. Die Anzeigedaten oder ihnen zugrunde liegende Daten werden vom Bordcomputer 44 auf die Steuerung 54 übertragen. Anzumerken ist, dass es denkbar wäre, die Funktionen des Bordcomputers 44 auf die Steuerung 54 des Bediengeräts 42 zu übertragen. Dann würde der Bordcomputer 44 eingespart und die Steuerung 54 würde - gegebenenfalls über die Datenübertragungseinrichtungen 46, 56 - direkt mit den Aktoren und Sensoren zusammenwirken.

Um den Mähdrescher nach Arbeitsende zu überprüfen oder bei einer Wartung kann das Bediengerät 42 von der in der Bedienerkabine 34 angeordneten Dockingstation getrennt werden. Über die mittels elektromagnetischer Radio- oder (infraroten) Licht-Wellen miteinander kommunizierenden Datenübertragungseinrichtungen 46, 56 steht der Bordcomputer 44 mit der Steuerung 54 des Bediengeräts 42 in Verbindung. Das Bediengerät 42 ermöglicht es dem Bediener, um den Mähdrescher 10 herumzugehen und - gegebenenfalls nach Öffnen von Verschlussklappen - sich die einzelnen Betriebselemente des Mähdreschers 10 anzusehen und über die Tastatur 52 die den Betriebselementen zugeordneten Aktoren zu beeinflussen. Zusätzlich zeigt die Anzeigeeinrichtung 50 die Messwerte von Sensoren an, die den Betriebselementen zugeordnet sind. Das tragbare, abnehmbare Bediengerät 42 ermöglicht somit eine bedienergesteuerte Änderung eines Betriebsparameters und eine simultane Ausgabe der Messwerte der Sensoren 38, 40 auf der Anzeigeeinrichtung 50 und optische und akustische Kontrolle der Betriebselemente durch den Bediener.

Befindet sich der Bediener beispielsweise in der Nähe des Reinigungsgebläses 30, kann er durch eine Eingabe in die Tastatur 52 einen Testdurchlauf des Reinigungsgebläses 30 veranlassen. Die Steuerung 54 veranlasst den Bordcomputer 44, dass der Elektromotor 29 einen bestimmten Drehzahlbereich durchläuft. Der Sensor 40 erfasst die Strömungsgeschwindigkeit des vom Reinigungsgebläse erfassten Luftstroms. In Verbindung mit einer im Bordcomputer 44 vorhandenen Information über die jeweilige Soll-Drehzahl des Elektromotors 29 wird während des gesamten Testdurchlaufs nach und nach eine Datensammlung angelegt, in der die Drehzahlen des Elektromotors 29 und die Strömungsgeschwindigkeiten abgelegt sind. Gleichzeitig kontrolliert der Bediener das Reinigungsgebläse optisch und akustisch. Nach Ende des Testdurchlaufs erfolgt ein Vergleich der erfassten Daten mit abgespeicherten Daten. Entsprechen die erfassten Daten abgespeicherten Sollwerten, wird auf der Anzeigeeinrichtung 50 angezeigt, dass der Testdurchlauf positiv verlaufen ist, anderenfalls werden Reparaturhinweise angezeigt. Analog kann der Bediener, wenn er sich in der Nähe der Dresch- und Trenneinrichtung 24 aufhält, über die Tastatur 52 einen Testdurchlauf der Dresch- und Trenneinrichtung 24 veranlassen. Über den verstellbaren Antrieb 23 veranlasst der Bordcomputer 44 dann, dass der Rotor der Dresch- und Trenneinrichtung 24 sukzessive mit verschiedenen Drehzahlen angetrieben wird. Die Solldrehzahl und die Messwerte des Sensors 38, der die aktuelle Drehzahl des Rotors der Dresch- und Trenneinrichtung 24 erfasst, werden nach und nach abgespeichert. Gleichzeitig kontrolliert der Bediener die Dresch- und Trenneinrichtung optisch und akustisch. Anschließend erfolgt ein Vergleich der gemessenen Daten mit abgespeicherten Daten. Sind keine auffälligen Unterschiede festzustellen, so dass man schließen kann, dass der verstellbare Antrieb 23 ordnungsgemäß arbeitet, wird mittels der Anzeigeeinrichtung 50 ein erfolgreicher Testdurchlauf angezeigt; anderenfalls können Reparaturvorschläge angezeigt werden.

Um dem Bediener die Arbeit zu vereinfachen, ist das Bediengerät mit einer Positionserfassungseinrichtung 62 ausgestattet. Letztere kann ein GPS-Empfänger sein. Die Steuerung 54 leitet aus Daten der Positionserfassungseinrichtung 62 und zweier GPS-Empfänger 64, 66 des Mähdreschers 10, die über die Datenübertragungseinrichtungen 46, 56 auf das Bediengerät 42 übertragen werden ab, an welcher Stelle des Mähdreschers 10 sich das Bediengerät 42 jeweils befindet. Ein auf der Anzeigeeinrichtung 50 dargestelltes Menü bietet jeweils nur Testdurchläufe an, die sich von der physikalischen Position, an der sich das Bediengerät 42 befindet, gut beobachten lassen. Sollte der Bediener dennoch einen bestimmten Testdurchlauf wünschen, obwohl er sich nicht an einer geeigneten Position befindet, kann gleichwohl durch eine entsprechende, die Auswahlmöglichkeiteinschränkung umgehende Eingabe der gewünschte Testlauf initiiert werden.

## Patentansprüche

1. Arbeitsmaschine mit mindestens einem Aktor und einem Bediengerät (42), das über ' eine drahtlose Datenübertragungseinrichtung (46, 56) zum Datenaustausch mit dem Aktor eingerichtet und mit einer Eingabeeinrichtung und einer Ausgabeeinrichtung versehen ist, wobei:
der Aktor mittels der Eingabeeinrichtung des Bediengeräts (42) beeinflussbar ist,
ein Sensor (38, 40) zur Messung eines durch den Aktor beeinflussbaren Betriebsparameters der Arbeitsmaschine eingerichtet ist,
die Messwerte und/oder davon abhängige Daten über die Datenübertragungseinrichtung (46, 56) auf das Bediengerät (42) übertragbar sind
und die Ausgabeeinrichtung betreibbar ist, eine von dem Messwert des Sensors (38, 40) abhängige Information zur Ausgabe zu bringen, und mit einer Positionsermittlungsvorrichtung (62)
**dadurch gekennzeichnet, dass** das Bediengerät (42) tragbar ist und dass die Eingabeeinrichtung des Bediengeräts (42) betreibbar ist, einen Testdurchlauf des Aktors zu veranlassen, in dem der Aktor unterschiedliche Betriebsparameter der Arbeitsmaschine bewirkt und dass die jeweils abrufbaren Testdurchläufe von der physikalischen Position des Bediengeräts (42) abhängen,
wobei durch die Positionsermittlungsvorrichtung (62) feststellbar ist, an welcher Stelle der Arbeitsmaschine sich das Bediengerät (42) gerade befindet und aus mindestens zwei Testdurchläufen durch eine entsprechende Software nur Testdurchläufe auswählbar sind,
die sich von der festgestellten Position des Bediengeräts (42) aus gut optisch und/oder akustisch verfolgen lassen und nur die ausgewählten Testdurchläufe mittels der Eingabeeinrichtung auswählbar sind.

2. Arbeitsmaschine nach Anspruch 1, **dadurch gekennzeichnet, dass** die Ausgabeeinrichtung betreibbar ist, einen Messwert des Sensors (38, 40) und vorzugsweise mindestens einen zulässigen, abgespeicherten Grenzwert und/oder eine dem Messwert des Sensors (38, 40) zugeordnete Information auszugeben.

3. Arbeitsmaschine nach Anspruch 1 oder 2, **dadurch gekennzeichnet, dass** die Ausgabeeinrichtung betreibbar ist, anhand abgespeicherter Daten aus den Messwerten des Sensors (38, 40) abgeleitete Informationen, insbesondere Handlungsvorschläge, auszugeben.

4. Arbeitsmaschine nach einem der Ansprüche 1 bis 3, **dadurch gekennzeichnet, dass** die Ausgabeeinrichtung betreibbar ist, einen Hinweis auf den jeweils durchgeführten Testdurchlauf auszugeben.

5. Arbeitsmaschine nach einem der Ansprüche 1 bis 4, **dadurch gekennzeichnet, dass** die Ausgabeeinrichtung betreibbar ist, ein aus Messwerten des Sensors (38, 40) abgeleitetes Ergebnis des Testdurchlaufs auszugeben.

## Claims

1. A work machine with at least one actuator and an operating device (42) which is arranged for data exchange with the actuator through a wireless data transmission device (46, 56) and is provided with an input device and an output device, wherein:
the actuator can be influenced by means of the input device of the operating device (42),
a sensor (38, 40) is arranged for measuring an operating parameter of the work machine which can be influenced by the actuator,
the measured values and/or data dependent thereon can be transmitted to the operating device (42) through the data transmission device (46, 56)
and the output device is operable to effect output of information dependent on the measured value of the sensor (38, 40),
and comprising a position determination device (62),
**characterized in that** the operating device (42) is portable and **in that** the input device of the operating device (42) is operable to cause a test run of the actuator, in which the actuator operates on different working parameters of the work machine and that the test runs which are capable of being called in each case depend on the physical position of the operating device (42),
wherein it can be determined by the position determination device (62) at which place on the work machine the operating device (42) is actually located and by a suitable software only test runs can be selected between at least two test runs that can be well observed optically and/or acoustically from the determined position of the operating device (42) and only the selected test runs can be chosen with the input device.

2. A work machine according to claim 1, **characterized in that** the output device is operable to output a measured value of the sensor (38, 40) and preferably at least one permissible, stored limit value and/or information associated with the measured value of the sensor (38, 40).

3. A work machine according to claim 1 or 2, **characterized in that** the output device is operable to issue information derived from the measured values of the sensor (38, 40), on the basis of stored data, especially recommendations for action.

4. A work machine according to any of claims 1 to 3, **characterized in that** the output device is operable to issue a recommendation for the respective performed test run.

5. A work machine according to any of claims 1 to 4, **characterized in that** the output device is operable to issue a result of the test run derived from the measured values of the sensor (38, 40).

## Revendications

1. Machine de travail comportant au moins un actionneur et un dispositif de commande (42), qui est conçu pour un échange de données avec l'actionneur via un dispositif de transmission des données (46, 56) sans fil et qui est muni d'un dispositif d'entrée et d'un dispositif de sortie, sachant que :
- l'actionneur peut être influencé par l'intermédiaire du dispositif d'entrée du dispositif de commande (42),
- un capteur (38, 40) est conçu pour mesurer un paramètre de service de la machine, lequel peut être influencé par l'actionneur,
- les valeurs de mesure et/ou les données qui en dépendent peuvent être transmises vers le dispositif de commande (42) via le dispositif de transmission des données (46, 56),
- et le dispositif de sortie peut être utilisé pour éditer une information qui est fonction de la valeur de mesure du capteur (38, 40),
et avec une dispositif (62) pour déterminer la position,
**caractérisée en ce que** le dispositif de commande (42) est portable et **en ce que** le dispositif d'entrée du dispositif de commande (42) peut être utilisé pour induire une procédure de contrôle de l'actionneur, dans laquelle l'actionneur met en oeuvre différents paramètres de service de la machine de travail et **en ce que** les procédures de contrôle, aptes à être chargées, dépendent de la position physique du dispositif de commande (42),
où par la dispositif (62) pour déterminer la position il est déterminable a quelle location à la machine de travail le dispositif de commande (42) est momentanément positionné et par une convenable logiciel seulement des procédures de contrôle peuvent sélectionné de minimalement deux procédures de contrôle qui se laissent poursuivre en manière optique et/ou acoustique de la position du dispositif de commande (42) déterminé, et seulement les procédure de contrôle sélectionné peuvent être choisi avec le dispositif d'entrée.

2. Machine de travail selon la revendication 1, **caractérisée en ce que** le dispositif de sortie peut être utilisé pour éditer une valeur de mesure du capteur (38, 40) et de préférence au moins une valeur limite admissible enregistrée et/ou une information associée à la valeur de mesure du capteur (38, 40).

3. Machine de travail selon la revendication 1 ou 2, **caractérisée en ce que** le dispositif de sortie peut être utilisé pour éditer des informations, en particulier des propositions de manipulation, dérivées des valeurs de mesure du capteur (38, 40) à l'appui de données enregistrées.

4. Machine de travail selon l'une quelconque des revendications 1 à 3, **caractérisée en ce que** le dispositif de sortie peut être utilisé pour éditer une indication sur chaque procédure de contrôle mise en oeuvre.

5. Machine de travail selon l'une quelconque des revendications 1 à 4, **caractérisée en ce que** le dispositif de sortie peut être utilisé pour éditer un résultat de la procédure de contrôle, dérivé des valeurs de mesure du capteur (38, 40).
